# EUROPEAN PATENT SPECIFICATION

(11) **EP 3 293 459 B1**
(45) Date of publication and mention of the grant of the patent: **06.05.2020**
(21) Application number: 17189570.9
(22) Date of filing: 06.09.2017
(51) Int. Cl.: F24D 10/00, F24D 17/00, F24D 19/10

(54) **FLUID SUPPLY SYSTEM**
FLÜSSIGKEITSZUFUHRSYSTEM
SYSTÈME D'ALIMENTATION EN FLUIDE

(30) Priority: 12.09.2016 DK 201600529
(43) Date of publication of application: 14.03.2018
(73) Proprietor: Danfoss A/S, 6430 Nordborg (DK)
(72) Inventor: Nielsen, Helge, 6470 Sydals (DK)
(74) Representative: Keil & Schaafhausen Patentanwälte PartGmbB

(56) References cited:
- EP-A1- 2 413 048
- WO-A1-86/06457
- DE-A1-102005 036 882
- DE-A1-102008 014 204

## Description

The invention relates to a fluid supply system comprising a district hot fluid supply line, a district fluid return line, a district cold fluid supply line, at least one local hot fluid line, at least one heat exchanger and a hot fluid pump, arranged in the district hot fluid supply line, wherein at least one heat exchanger comprises a primary side that is connected at a primary inlet to the district hot fluid supply line and at a primary outlet to the district fluid return line, and wherein the at least one heat exchanger comprises a secondary side that is connected at a secondary inlet to the district cold fluid supply line and at a secondary outlet to the local hot fluid line, and wherein the at least one local hot fluid line is connected to at least one local fluid tapping unit to supply heated fluid from the secondary outlet of the connected heat exchanger, wherein the hot fluid pump is configured such that it is activated if a need for hot fluid is detected, and wherein the hot fluid pump is configured such that it is activated if fluid is tapped at one of the local fluid tapping units.

Such a fluid supply system is known, for example, from DE 10 2005 036 882 A1. The system comprises a single heat exchanger and a control valve in the district hot fluid supply line which can be regulated very fast in order to avoid a hot water storage and to avoid an increase of the temperature on the secondary side exceeding 60 °C.

DE 10 2008 014 204 A1 discloses a plant for heating tap water having a first heat exchanger and a second heat exchanger which are connected in series. A tank is provided receiving hot water from the district hot fluid supply line the heat of which has not sufficiently transferred to the heated tap water.

EP 2 413 048 A1 describes a tap water heating unit having a plurality of heat exchangers connected in parallel between a hot fluid supply line and a fluid return line on the primary side and a cold fluid supply line and a local hot fluid line at the secondary side. The supply line is connected to a local hot water storage tank.

For the scope of this application the fluid may be water in particular in the local hot fluid line and the district cold fluid line or in all fluid lines. For the district hot fluid line and the district fluid return line the fluid may alternatively be water steam, decalcified water or a suitable alternative.

A further water supply system is for example known from EP 1 342 957 A1. Therein the hot water pump is arranged downstream of the secondary outlet of the heat exchanger in the local hot water line. A flow sensor in the hot water line detects if hot water is dispensed at a local water tapping unit connected to the local hot water line.

This solution is advantageous for a single consumer (e.g. a single house connected to a district hot water supply line remote from other connected consumers). However, in case multiple consumers in close vicinity (e.g. in a development area) are to be connected to the district hot water supply line the above solution is relatively expensive and complicated.

The task of the present invention is therefore to provide a fluid supply system that simplifies installation and maintenance.

According to the present invention the above task is solved in that the fluid supply system comprises two or more heat exchangers, wherein each heat exchanger is connected at its respective primary inlet to the district hot fluid supply line, at its respective primary outlet to the district fluid return line, at its respective secondary inlet to the district cold fluid supply line and at its respective secondary outlet each to a corresponding local hot fluid line, wherein each heat exchanger is connected at its respective secondary outlet to a different local hot fluid line, wherein the hot fluid pump provides hot fluid to all connected heat exchangers, wherein a main sensor is arranged in the district cold fluid supply line to detect if fluid is tapped at one of the local fluid tapping units.

With this solution each heat exchanger can, for example, be associated with an apartment in a multi-apartment building or with a single household building. Only one hot fluid pump is necessary to supply one or more heat exchangers which simplifies installation and maintenance and consequently reduces costs. Furthermore, adding an additional consumer to an existing fluid supply system is simplified in particular since no additional pump is required. Furthermore, the solution reduces energy loss due to heat dissipation, reduces the time necessary to reach the desired temperature of the fluid at the local fluid tapping units and reduces the risk of bacteria (e.g. legionella) spreading in the system.

The at least one local fluid tapping unit may also be connected to the district cold fluid supply line. If the main sensor detects that fluid is tapped in one of the local fluid tapping units it may then provide a signal to a control unit. The control unit may then send a activation signal to the hot fluid pump. The main sensor may also send the activation signal directly to the hot fluid pump.

In an embodiment the fluid is water. Consequently, the fluid supply system may be a water supply system. The district hot fluid supply line may be a district hot water supply line. The district fluid return line may be a district water return line. The district cold fluid supply line may be a district cold water supply line. The at least one local hot fluid line may be at least one local hot water line. The hot fluid pump may be a hot water pump.

In an embodiment of the invention the fluid supply system comprises a main check valve that is arranged in the district cold fluid supply line, wherein the sensor detects the opening of the main check valve, and wherein the main check valve is normally closed and opens if the fluid pressure downstream the main check valve drops in response to fluid being tapped at one of the connected local fluid tapping units. This solution is relatively simple since the main check valve may be purely pressure controlled without the need of an actuator. The main sensor may in this embodiment be connected to the main check valve to detect if the main check valve is in an open position. If the main sensor detects a change in opening position of the main check valve will then communicate this to the control unit which may in turn start the hot fluid pump. Alternatively, the main sensor may directly signal the hot fluid pump to activate.

A local check valve may be arranged at the secondary side of each heat exchanger, wherein the local check valve is normally closed and opens if the fluid pressure at the corresponding secondary outlet drops in response to fluid being tapped at at least one connected local fluid tapping unit. The local check valve may be purely pressure controlled. This embodiment has the advantage that in principle no connection of the local check valve to the control unit is necessary.

In an embodiment at least one local check valve is arranged at a secondary inlet.

In an embodiment the local check valve only opens in response to fluid being drawn from the local hot fluid line. In this embodiment the local hot fluid line leading to the connected local fluid tapping units is kept separate from the connection of the local fluid tapping unit to the district cold fluid supply line to avoid a pressure drop at the secondary side which may lead to an opening of the local check valve.

In an embodiment a restrictor valve is arranged at the primary side of each heat exchanger to allow or restrict a flow of hot fluid through the primary side of the heat exchanger. This way, it is ensured that the primary side of an inactive heat exchanger is not heated up if a different heat exchanger of the fluid supply system is being activated.

In an embodiment at least one restrictor valve is arranged at the primary outlet.

In an embodiment at least one local check valve is mechanically connected to the restrictor valve arranged at the same heat exchanger. The mechanical connection may be facilitated by a pin translating a change in valve position of the local check valve to a change in valve position of the restrictor valve in the same heat exchanger. The pin may be connected to both valve elements of the local check valve and the restrictor valve. This embodiment has the advantage that both the local check valve and the restrictor valve may be purely pressure controlled which reduces costs of the individual heat exchanger unit.

In an embodiment the restrictor valve is automatically opened if the connected local check valve opens. A simple way to facilitate this functionality is to mechanically connect the restrictor valve to the at least one local check valve in the same heat exchanger. Alternatively, the restrictor valve may be actuated by an actuator to be opened when it is detected that the local check valve has opened.

In an embodiment at least one restrictor valve is a thermostatic valve comprising a thermostatic actuator to control the flow of hot fluid through the primary side of the heat exchanger. This embodiment has the advantage that the flow of hot fluid through the primary side of the heat exchanger can be more exactly regulated. This is advantageous, for example, if the heat exchanger supplies a multitude of connected local fluid tapping units. In this case, the amount of flow of hot fluid through the heat exchanger can be limited, for example, if only one of a plurality of connected local fluid tapping units requires hot fluid. The thermostatic valve in this case can be controlled by the control unit. The control unit here may be a local control unit associated with the heat exchanger (i.e. with the connected consumer).

In an embodiment at least one secondary sensor is arranged at the secondary side of the at least one heat exchanger to detect the flow of fluid towards the local hot fluid line. The amount of flow detected by the secondary sensor can then be provided to the control unit. Based on the detected flow by the secondary sensor the control unit can then send a control signal to the restrictor valve. Preferably, the secondary sensor is arranged at the secondary outlet.

In an embodiment the control unit limits the opening degree of the restrictor valve according to the amount of flow detected by the secondary sensor in the same heat exchanger.

A preferred embodiment of the invention is now described with reference to the figure wherein:

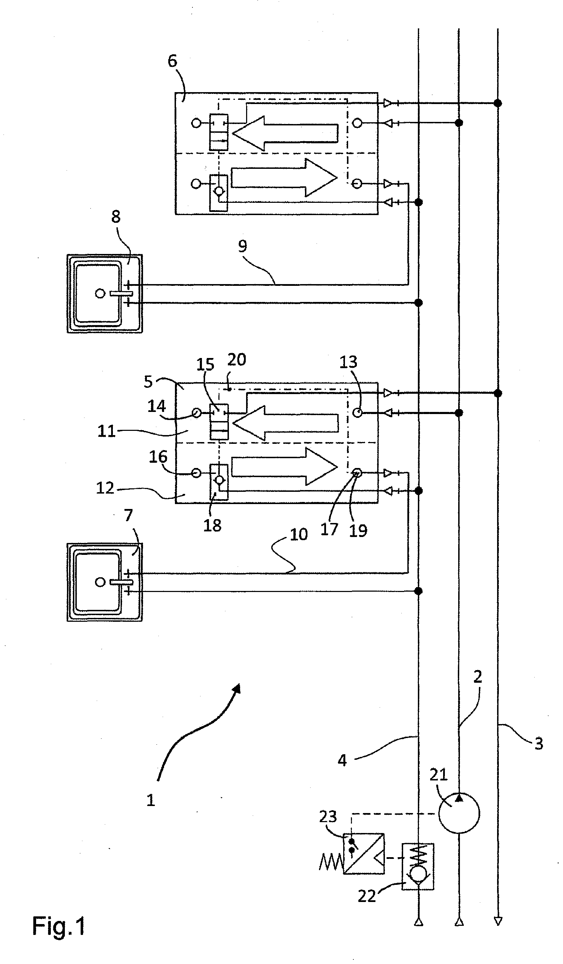

- Fig. 1: shows a fluid supply system according to a preferred embodiment of the invention.

Fig. 1 shows a fluid supply system 1 comprising a district hot fluid supply line 2, a district fluid return line 3 and a district cold fluid supply line 4. The fluid supply system 1 furthermore comprises in this case two heat exchangers 5, 6. Each heat exchanger 5, 6 may be associated, for example, with an apartment in a multi-apartment building or with a single household building each. The fluid supply system 1 may also comprise a multitude of heat exchangers 5, 6.

Each heat exchanger 5, 6 provides at least one local fluid tapping unit 7, 8. Each heat exchanger 5, 6 may however supply a multitude of local fluid tapping units 7, 8. The local fluid tapping units 7, 8 are connected to their respective heat exchanger 5, 6 via a local hot fluid line 9, 10. Each heat exchanger 5, 6 comprises a primary side 11 and a secondary side 12. The primary side 11 is connected to the district hot fluid supply line 2 at a primary inlet 13. The hot fluid from the district hot fluid supply line 2 flows through the primary side 11 until it exits a primary outlet 14. At the primary side 11 the heat exchanger 5 furthermore comprises a restrictor valve 15 which is in this embodiment arranged downstream of the primary outlet 14.

At the secondary side 12 of the heat exchanger 5, 6 cold fluid from the district cold fluid supply line 4 enters through a secondary inlet 16. When the heat exchanger 5, 6 is active the cold fluid flowing through the secondary side 12 is heated up by the hot fluid flowing through the primary side 11. The heated up fluid at the secondary side 12 then exits at a secondary outlet 17. The secondary outlet 17 is connected to the local hot fluid line 9, 10.

At the secondary side 12 of the heat exchanger 5 furthermore a local check valve 18 is arranged. The local check valve 18 is normally closed an opens if the fluid pressure at the secondary outlet 17 drops in response to fluid being tapped at the connected local fluid tapping unit 7. The local check valve 18 can be connected mechanically to the restrictor valve 15 such that if the local check valve 18 opens the restrictor valve will also be opened.

Alternatively, the restrictor valve 15 can be a thermostatic valve comprising a thermostatic actuator to control the flow of hot fluid through the primary side 11 of the heat exchanger 5. In this case the fluid supply system 1 advantageously comprises a secondary sensor 19 to detect the amount of flow through the secondary side 12. The secondary sensor 19 is here depicted as being located at the secondary outlet 17. A signal from the secondary sensor 19 can then be provided to the thermostatic actuator 20 to change the opening degree of the restrictor valve 15 to control the amount of flow of hot fluid through the primary side 11. The signal may also be provided to a local or central control unit which may control the restrictor valve(s) 15 and/or the hot fluid pump described below.

The fluid supply system 1 comprises a hot fluid pump 21 which is arranged in the district hot fluid supply line 2. If no fluid is being tapped from the local fluid tapping units 7, 8 the hot fluid pump 21 will be inactive. In the district cold fluid supply line 4 a main check valve 22 is arranged. The main check valve 22 opens in response to a drop in pressure downstream of the main check valve 22 due to fluid being drawn from one of the connected local fluid tapping units 7, 8.

Furthermore, the fluid supply system 1 comprises a sensor 23 which detects a change in valve position of the main check valve 22. When such a change to an open valve position of the main check valve 22 is detected by the sensor 23 an activation signal is sent to the hot fluid pump 21. This activation signal may be send by a central control unit. At the same time in the heat exchanger 5, 6 connected to the local fluid tapping unit 7, 8 that has been activated the local check valve 18 will also change the valve position and similarly the restrictor valve 15 in the same heat exchanger 5, 6. Thereby, the heating up of cold fluid flowing through the secondary side 12 by the hot fluid flowing through the primary side 11 will be facilitated such that hot fluid can be supplied through the local hot fluid line 9, 10 connected to the active local fluid tapping unit 7, 8.

The fluid in the above described embodiment may be water, decalcified water, water steam or a suitable alternative fluid. The district hot fluid supply line and the district fluid return line may use a different fluid than the other fluid lines since the district hot fluid supply line and the district fluid return line may form a closed circuit.

## Claims

1. Fluid supply system (1) comprising a district hot fluid supply line (2), a district fluid return line (3), a district cold fluid supply line (4), at least one local hot fluid line (9, 10), at least one heat exchanger (5, 6) and a hot fluid pump (21) arranged in the district hot fluid supply line (2), wherein the at least one heat exchanger (5, 6) comprises a primary side (11) that is connected at a primary inlet (13) to the district hot fluid supply line (2) and at a primary outlet to the district fluid return line (3), and wherein the at least one heat exchanger (5, 6) comprises a secondary side (12) that is connected at a secondary inlet (16) to the district cold fluid supply line (4) and at a secondary outlet (17) to the local hot fluid line (9, 10), and wherein the at least one local hot fluid line (9, 10) is connected to at least one local fluid tapping unit (7, 8) to supply heated fluid from the secondary outlet (17) of the connected heat exchanger (5, 6), and wherein the hot fluid pump (21) is configured such that it is activated if a need for hot fluid is detected, wherein the hot fluid pump (21) is configured such that it is activated if fluid is tapped at one of the fluid tapping units (7, 8), **characterized in that** the fluid supply system (1) comprises two or more heat exchangers (5, 6), wherein each heat exchanger (5, 6) is connected at its respective primary inlet (13) to the district hot fluid supply line (2), at its respective primary outlet (14) to the district fluid return line (3), at its respective secondary inlet (16) to the district cold fluid supply line (4) and at its respective secondary outlet (17) each to a corresponding local hot fluid line (9, 10), wherein each heat exchanger (5, 6) is connected at the respective secondary outlet to a different local hot fluid line (9, 10), wherein the hot fluid pump (21) provides hot fluid to all connected heat exchangers (5, 6), and wherein a main sensor (23) is arranged in the district cold fluid supply line (4) to detect if fluid is tapped at one of the fluid tapping units (7, 8).

2. Fluid supply system (1) according to claim 1, **characterized in that** the fluid is water.

3. Fluid supply system (1) according to claim 1 or 2, **characterized in that** the fluid supply system (1) comprises a main check valve (22) that is arranged in the district cold fluid supply line (4), wherein the main sensor (23) detects the opening of the main check valve (22), and wherein the main check valve (22) is normally closed and opens if the fluid pressure downstream the main check valve (22) drops in response to fluid being tapped at one of the connected local fluid tapping units (7, 8).

4. Fluid supply system (1) according to any of claim 1 to 3, **characterized in that** a local check valve (18) is arranged at the secondary side (12) of each heat exchanger (5, 6), wherein the local check valve (18) is normally closed and opens if the fluid pressure at the corresponding secondary outlet (12) drops in response to water being tapped at at least one connected local fluid tapping unit (7, 8).

5. Fluid supply system (1) according to claim 4, **characterized in that** at least one local check valve (18) is arranged at a secondary inlet (16).

6. Fluid supply system (1) according to claim 4 or 5, **characterized in that** the local check valve (18) only opens in response to fluid being drawn from the connected local hot fluid line (9, 10).

7. Fluid supply system (1) according to any of claims 1 to 6, **characterized in that** a restrictor valve (15) is arranged at the primary side (11) of each heat exchanger (5, 6) to allow or restrict a flow of hot fluid through the primary side (11) of the heat exchanger (5, 6).

8. Fluid supply system (1) according to claim 7, **characterized in that** at least one restrictor valve (15) is arranged at the primary outlet (14).

9. Fluid supply system (1) according to claim 7 or 8, **characterized in that** at least one local check valve (18) is mechanically connected to the restrictor valve (15) arranged in the same heat exchanger (5, 6).

10. Fluid supply system (1) according to any of claims 7 to 10, **characterized in that** the restrictor valve (15) is configured such that it is automatically opened if the connected local check valve (18) opens.

11. Fluid supply system (1) according to any of claims 7 to 10, **characterized in that** at least one restrictor valve (15) is a thermostatic valve comprising a thermostatic actuator (20) to control the flow of hot fluid through the primary side (11) of the heat exchanger (5, 6).

12. Fluid supply system (1) according to any of claims 1 to 11, **characterized in that** at least one secondary sensor (19) is arranged at the secondary side (12) of the at least one heat exchanger (5, 6) to detect the flow of fluid towards the local hot fluid line (9, 10).

13. Fluid supply system (1) according to claim 12, **characterized in that** the opening degree of the restrictor valve (15) is limited according to the amount of flow detected by the secondary sensor (19) in the same heat exchanger (5, 6).

## Patentansprüche

1. Flüssigkeitsversorgungssystem (1), das eine Distrikt-Heißflüssigkeitsversorgungsleitung (2), eine Distrikt-Flüssigkeitsrückleitung (3), eine Distrikt-Kaltflüssigkeitsversorgungsleitung (4), mindestens eine lokale Heißflüssigkeitsleitung (9, 10), mindestens einen Wärmetauscher (5, 6) und eine in der Distrikt-Heißflüssigkeitsversorgungsleitung (2) angeordnete Heißflüssigkeitspumpe (21) aufweist, wobei der mindestens eine Wärmetauscher (5, 6) eine Primärseite (11), die an einem Primäreinlass (13) mit der Distrikt- Heißflüssigkeitsversorgungsleitung (2) und an einem Primärauslass mit der Distrikt-Flüssigkeitsrückleitung (3) verbunden ist, aufweist, und wobei der mindestens eine Wärmetauscher (5, 6) eine Sekundärseite (12) aufweist, die an einem Sekundäreinlass (16) mit der Distrikt-Kaltflüssigkeitsversorgungsleitung (4) und an einem Sekundärauslass (17) mit der lokalen Heißflüssigkeitsleitung (9, 10) verbunden ist, und wobei die mindestens eine lokale Heißflüssigkeitsleitung (9, 10) mit mindestens einer lokalen Flüssigkeitsentnahmeeinheit (7, 8) verbunden ist, um erwärmte Flüssigkeit aus dem Sekundärauslass (17) des angeschlossenen Wärmetauschers (5, 6) zuzuführen, und wobei die Heißflüssigkeitspumpe (21) so ausgebildet ist, dass sie aktiviert wird, wenn ein Bedarf an heißer Flüssigkeit erfasst wird, wobei die Heißflüssigkeitspumpe (21) so ausgebildet ist, dass sie aktiviert wird, wenn Flüssigkeit an einer der Flüssigkeitsentnahmeeinheiten (7, 8) entnommen wird, **dadurch gekennzeichnet, dass** das Flüssigkeitsversorgungssystem (1) zwei oder mehr Wärmetauscher (5, 6) aufweist, wobei jeder Wärmetauscher (5, 6) an seinem jeweiligen Primäreinlass (13) mit der Distrikt-Heißflüssigkeitsversorgungsleitung (2), an seinem jeweiligen Primärauslass (14) mit der Distrikt-Flüssigkeitsrückleitung (3), an seinem jeweiligen Sekundäreinlass (16) mit der Distrikt-Kaltflüssigkeitsleitung (4) und an seinem jeweiligen Sekundärauslass (17) jeweils mit einer entsprechenden lokalen Heißflüssigkeitsleitung (9, 10) verbunden ist, wobei jeder Wärmetauscher (5, 6) an dem jeweiligen Sekundärauslass mit einer anderen lokalen Heißflüssigkeitsleitung (9, 10) verbunden ist, wobei die Heißflüssigkeitspumpe (21) allen angeschlossenen Wärmetauschern (5, 6) heiße Flüssigkeit zuführt, und wobei ein Hauptsensor (23) in der Distrikt-Kaltflüssigkeitsversorgungsleitung (4) angeordnet ist, um zu erkennen, ob Flüssigkeit an einer der Flüssigkeitsentnahmeeinheiten (7, 8) entnommen wird.

2. Flüssigkeitsversorgungssystem (1) nach Anspruch 1, **dadurch gekennzeichnet, dass** die Flüssigkeit Wasser ist.

3. Flüssigkeitsversorgungssystem (1) nach Anspruch 1 oder 2, **dadurch gekennzeichnet, dass** das Flüssigkeitsversorgungssystem (1) ein Hauptrückschlagventil (22) aufweist, das in der Distrikt-Kaltflüssigkeitsversorgungsleitung (4) angeordnet ist, wobei der Hauptsensor (23) das Öffnen des Hauptrückschlagventils (22) erfasst, und wobei das Hauptrückschlagventil (22) normalerweise geschlossen ist und öffnet, wenn der Flüssigkeitsdruck stromabwärts des Hauptrückschlagventils (22) als Reaktion auf das Zapfen von Flüssigkeit an einer der angeschlossenen lokalen Flüssigkeitsentnahmeeinheiten (7, 8) abfällt.

4. Flüssigkeitsversorgungssystem (1) nach einem der Ansprüche 1 bis 3, **dadurch gekennzeichnet, dass** ein lokales Rückschlagventil (18) an der Sekundärseite (12) jedes Wärmetauschers (5, 6) angeordnet ist, wobei das lokale Rückschlagventil (18) normalerweise geschlossen ist und öffnet, wenn der Flüssigkeitsdruck an dem entsprechenden Sekundärauslass (12) als Reaktion auf die Entnahme von Wasser an mindestens einer angeschlossenen lokalen Flüssigkeitsentnahmeeinheit (7, 8) abfällt.

5. Flüssigkeitsversorgungssystem (1) nach Anspruch 4, **dadurch gekennzeichnet, dass** mindestens ein lokales Rückschlagventil (18) an einem Sekundäreinlass (16) angeordnet ist.

6. Flüssigkeitsversorgungssystem (1) nach Anspruch 4 oder 5, **dadurch gekennzeichnet, dass** das lokale Rückschlagventil (18) nur dann öffnet, wenn Flüssigkeit aus der angeschlossenen lokalen Heißflüssigkeitsleitung (9, 10) entnommen wird.

7. Flüssigkeitsversorgungssystem (1) nach einem der Ansprüche 1 bis 6, **dadurch gekennzeichnet, dass** ein Drosselventil (15) an der Primärseite (11) jedes Wärmetauschers (5, 6) angeordnet ist, um einen Strom von heißer Flüssigkeit durch die Primärseite (11) des Wärmetauschers (5, 6) zuzulassen oder zu begrenzen.

8. Flüssigkeitsversorgungssystem (1) nach Anspruch 7, **dadurch gekennzeichnet, dass** mindestens ein Drosselventil (15) am Primärauslass (14) angeordnet ist.

9. Flüssigkeitsversorgungssystem (1) nach Anspruch 7 oder 8, **dadurch gekennzeichnet, dass** mindestens ein lokales Rückschlagventil (18) mechanisch mit dem im selben Wärmetauscher (5, 6) angeordneten Drosselventil (15) verbunden ist.

10. Flüssigkeitsversorgungssystem (1) nach einem der Ansprüche 7 bis 10, **dadurch gekennzeichnet, dass** das Drosselventil (15) so ausgebildet ist, dass es automatisch öffnet, wenn das verbundene lokale Rückschlagventil (18) öffnet.

11. Flüssigkeitsversorgungssystem (1) nach einem der Ansprüche 7 bis 10, **dadurch gekennzeichnet, dass** mindestens ein Drosselventil (15) ein Thermostatventil ist, das ein thermostatisches Stellglied (20) aufweist, um den Strom von heißer Flüssigkeit durch die Primärseite (11) des Wärmetauschers (5, 6) zu steuern.

12. Flüssigkeitsversorgungssystem (1) nach einem der Ansprüche 1 bis 11, **dadurch gekennzeichnet, dass** mindestens ein Sekundärsensor (19) auf der Sekundärseite des mindestens einen Wärmetauschers (5, 6) angeordnet ist, um den Flüssigkeitsstrom zu der lokalen Heißflüssigkeitsleitung (9, 10) zu erfassen.

13. Flüssigkeitsversorgungssystem (1) nach Anspruch 12, **dadurch gekennzeichnet, dass** der Öffnungsgrad des Drosselventils (15) entsprechend der von dem sekundären Sensor (19) in demselben Wärmetauscher (5, 6) erfassten Durchflussmenge begrenzt ist.

## Revendications

1. Système d'alimentation en fluide (1) comprenant une ligne d'alimentation en fluide chaud de secteur (2), une ligne de retour de fluide de secteur (3), une ligne d'alimentation en fluide froid de secteur (4), au moins une ligne de fluide chaud locale (9, 10), au moins un échangeur de chaleur (5, 6) et une pompe à fluide chaud (21) agencée dans la ligne d'alimentation en fluide chaud de secteur (2), dans lequel l'au moins un échangeur de chaleur (5, 6) comprend un côté primaire (11) qui est relié par une entrée primaire (13) à la ligne d'alimentation en fluide chaud de secteur (2) et par une sortie primaire à la ligne de retour de fluide de secteur (3), et dans lequel l'au moins un échangeur de chaleur (5, 6) comprend un côté secondaire (12) qui est relié par une entrée secondaire (16) à la ligne d'alimentation en fluide froid de secteur (4) et par une sortie secondaire (17) à la ligne de fluide chaud locale (9, 10), et dans lequel l'au moins une ligne de fluide chaud locale (9, 10) est reliée à au moins une unité de piquage de fluide locale (7, 8) pour alimenter du fluide chauffé venant de la sortie secondaire (17) de l'échangeur de chaleur (5, 6) relié, et dans lequel la pompe à fluide chaud (21) est configurée de telle sorte qu'elle est activée si un besoin de fluide chaud est détecté, dans lequel la pompe à fluide chaud (21) est configurée de telle sorte qu'elle est activée si du fluide est piqué à une des unités de piquage de fluide (7, 8), **caractérisé en ce que** le système d'alimentation en fluide (1) comprend deux échangeurs de chaleur (5, 6) ou plus, dans lequel chaque échangeur de chaleur (5, 6) est relié par son entrée primaire (13) respective à la ligne d'alimentation en fluide chaud de secteur (2), par sa sortie primaire (14) respective à la ligne de retour de fluide de secteur (3), par son entrée secondaire (16) respective à la ligne d'alimentation en fluide froid de secteur (4) et par sa sortie secondaire (17) respective chacun à une ligne de fluide chaud locale (9, 10) correspondante, dans lequel chaque échangeur de chaleur (5, 6) est relié par la sortie secondaire respective à une ligne de fluide chaud locale (9, 10) différente, dans lequel la pompe à fluide chaud (21) alimente du fluide chaud vers tous les échangeurs de chaleur (5, 6) reliés, et dans lequel un capteur principal (23) est agencé dans la ligne d'alimentation en fluide froid de secteur (4) pour détecter si du fluide est piqué à une des unités de piquage de fluide (7, 8).

2. Système d'alimentation en fluide (1) selon la revendication 1, **caractérisé en ce que** le fluide est de l'eau.

3. Système d'alimentation en fluide (1) selon la revendication 1 ou 2, **caractérisé en ce que** le système d'alimentation en fluide (1) comprend un clapet de non-retour (22) principal qui est agencé dans la ligne d'alimentation en fluide froid de secteur (4), dans lequel le capteur principal (23) détecte l'ouverture du clapet de non-retour (22) principal, et dans lequel le clapet de non-retour (22) principal est normalement fermé et s'ouvre si la pression fluidique en aval du clapet de non-retour (22) principal chute en réponse à du fluide en train d'être piqué sur l'une des unités de piquage de fluide (7, 8) reliées.

4. Système d'alimentation en fluide (1) selon l'une quelconque des revendications 1 à 3, **caractérisé en ce qu'**un clapet de non-retour (18) local est agencé sur le côté secondaire (12) de chaque échangeur de chaleur (5, 6), dans lequel le clapet de non-retour (18) local est normalement fermé et s'ouvre si la pression fluidique sur la sortie secondaire (12) correspondante chute en réponse à de l'eau en train d'être piquée sur au moins une unité de piquage de fluide (7, 8) reliée.

5. Système d'alimentation en fluide (1) selon la revendication 4, **caractérisé en ce qu'**au moins un clapet de non-retour local (18) est agencé sur une entrée secondaire (16).

6. Système d'alimentation en fluide (1) selon la revendication 4 ou 5, **caractérisé en ce que** le clapet de non-retour local (18) s'ouvre uniquement en réponse à du fluide en train d'être tiré de la ligne de fluide chaud locale (9, 10) reliée.

7. Système d'alimentation en fluide (1) selon l'une quelconque des revendications 1 à 6, **caractérisé en ce qu'**un clapet réducteur (15) est agencé sur le côté primaire (11) de chaque échangeur de chaleur (5, 6) pour permettre ou restreindre un débit de fluide chaud à travers le côté primaire (11) de l'échangeur de chaleur (5, 6).

8. Système d'alimentation en fluide (1) selon la revendication 7, **caractérisé en ce qu'**au moins un clapet réducteur (15) est agencé sur la sortie primaire (14).

9. Système d'alimentation en fluide (1) selon la revendication 7 ou 8, **caractérisé en ce qu'**au moins un clapet de non-retour local (18) est relié mécaniquement au clapet réducteur (15) agencé dans le même échangeur de chaleur (5, 6).

10. Système d'alimentation en fluide (1) selon l'une quelconque des revendications 7 à 10, **caractérisé en ce que** le clapet réducteur (15) est configuré de telle façon qu'il est automatiquement ouvert si le clapet de non-retour local (18) s'ouvre.

11. Système d'alimentation en fluide (1) selon l'une quelconque des revendications 7 à 10, **caractérisé en ce qu'**au moins un clapet réducteur (15) est une soupape thermostatique comprenant un déclencheur thermostatique (20) pour commander le débit de fluide chaud à travers le côté primaire (11) de l'échangeur de chaleur (5, 6).

12. Système d'alimentation en fluide (1) selon l'une quelconque des revendications 1 à 11, **caractérisé en ce qu'**au moins un capteur secondaire (19) est agencé sur le côté secondaire (12) de l'au moins un échangeur de chaleur (5, 6) pour détecter le débit de fluide en direction de la ligne de fluide chaud locale (9, 10).

13. Système d'alimentation en fluide (1) selon la revendication 12, **caractérisé en ce que** le degré d'ouverture du clapet réducteur (15) est limité selon la quantité de débit détectée par le capteur secondaire (19) dans le même échangeur de chaleur (5, 6) .
